# EUROPEAN PATENT SPECIFICATION

(11) **EP 3 109 929 B1**
(45) Date of publication and mention of the grant of the patent: **10.04.2019**
(21) Application number: 15752260.8
(22) Date of filing: 05.02.2015
(51) Int. Cl.: H01M 4/131, H01M 4/36, H01M 4/505, H01M 4/525, H01M 4/587, H01M 4/62, H01M 10/052, H01M 10/0567, H01M 10/0568, H01M 4/133, H01M 4/583, H01M 10/0525, H01M 4/02

(54) **LITHIUM ION SECONDARY BATTERY CATHODE AND LITHIUM ION SECONDARY BATTERY USING SAME**
LITHIUM-IONEN-BATTERIEKATHODE UND LITHIUM-IONEN-SEKUNDÄRBATTERIE DAMIT
CATHODE DE BATTERIE RECHARGEABLE AU LITHIUM-ION ET BATTERIE RECHARGEABLE AU LITHIUM-ION L'UTILISANT

(30) Priority: 20.02.2014 JP 2014030511
(43) Date of publication of application: 28.12.2016
(73) Proprietor: NEC Energy Devices, Ltd., Kanagawa 252-5298 (JP)
(72) Inventor: HAMANAKA, Nobuaki, Sagamihara-shi Kanagawa 252-5298 (JP)
(74) Representative: Vossius & Partner Patentanwälte Rechtsanwälte mbB
(86) International application number: PCT/JP2015/053179
(87) International publication number: WO 2015/125610

(56) References cited:
- EP-A1- 2 368 851
- JP-A- H10 208 728
- JP-A- 2000 003 724
- JP-A- 2002 319 435
- JP-A- 2002 319 435
- JP-A- 2007 080 583
- JP-A- 2010 155 775
- JP-A- 2012 230 898

## Description

The present exemplary embodiment relates to a positive electrode for a lithium ion secondary battery and the lithium ion secondary battery using the same.

Lithium ion secondary batteries are characterized by being small in size and large in capacity, and are widely used as electric power sources for cellular phones, laptop computers and the like. With such expansion of application, lithium ion secondary batteries are demanded to be further improved in the capacity retention rate in the charge-discharge cycles. As the techniques related to lithium ion secondary batteries, for example, the inventions described in Patent Literature 1 to Patent Literature 12 may be quoted. JP 2002/319 435 A refers to a nonaqueous electrolyte secondary cell comprising a positive electrode containing positive electrode activator, a negative electrode containing a material into and from which, lithium can be doped and dedoped, and a nonaqueous electrolyte, and contains at least one compound chosen from lithium manganese complex oxide and lithium nickel group complex oxide as the positive electrode activator, and the voltage at preservation ranges 3.4 V-3.75 V. EP 236 8851 A1 refers to lithium composite compound particles having a composition represented by the formula: Li 1+x Ni 1-y-z Co y M z O 2 (M = B or Al), wherein the lithium composite compound particles have an ionic strength ratio A (LiO - /NiO 2 -) of not more than 0.3 and an ionic strength ratio B (Li 3 CO 3 + /Ni +) of not more than 20 as measured on a surface of the respective lithium composite compound particles using a time-of-flight secondary ion mass spectrometer.

Patent Literature 1: JP10-265224A
Patent Literature 2: JP2000-208148A
Patent Literature 3: JP2002-279986A
Patent Literature 4: JP2003-282140A
Patent Literature 5: JP2006-173049A
Patent Literature 6: WO2010-082261A1
Patent Literature 7: JP2007-080583A
Patent Literature 8: JP2002-319435A
Patent Literature 9: JP2010-155775A
Patent Literature 10: JP2012-230898A
Patent Literature 11: JP10-208728A
Patent Literature 12: JP2000-003724A

However, the inventions described in Patent Literature 1 to Patent Literature 12 are insufficient in the capacity retention rate in the charge-discharge cycles and are desired to be further improved.

An object of the present exemplary embodiment is to provide a lithium ion secondary battery having a high capacity retention rate in the charge-discharge cycles.

The invention is defined by the independent claims. Dependent claims refer to preferred embodiments.

The positive electrode for a lithium ion secondary battery according to the present exemplary embodiment includes a positive electrode active material including a compound represented by the following formula (1):

Liₓ(Ni_{y}Co_{z}Al_{w})O₂ (1)

wherein, in formula (1), 0.95≤x≤1.05, 0.70≤y≤0.85, 0.05≤z≤0.20, 0.00≤w≤0.10, and y+z+w=1, and a compound represented by the following formula (2):

Li₁₊ᵤMn_{2-u/3}O₄ (2)

wherein, in formula (2), 0≤u≤0.05,
wherein the content of an alkali metal hydroxide in the positive electrode active material is 0.15% by mass or less.

The lithium ion secondary battery according to the present exemplary embodiment includes the positive electrode for a lithium ion secondary battery according to the present exemplary embodiment and a negative electrode.

According to the present exemplary embodiment, it is possible to provide a lithium ion secondary battery having a high capacity retention rate in charge-discharge cycles.

### Brief Description of Drawings

Figure 1 is a cross-sectional view of an example of the lithium ion secondary battery according to the present exemplary embodiment.
Figure 2 is a graph showing the capacity retention rates of Examples and/or Comparative Examples against the number of cycles.
Figure 3 is a graph showing the capacity retention rates of Examples and/or Comparative Examples against the number of cycles.
Figure 4 is a graph showing the capacity retention rates of Examples and/or Comparative Examples against the number of cycles.
Figure 5 is a graph showing the capacity retention rates of Examples and/or Comparative Examples against the number of cycles.
Figure 6 is a graph showing the capacity retention rates of Examples and/or Comparative Examples against the number of cycles.
Figure 7 is a graph showing the capacity retention rates of Examples and/or Comparative Examples against the number of cycles.
Figure 8 is a graph showing the capacity retention rates of Examples and/or Comparative Examples against the number of cycles.

### Description of Exemplary Embodiment

### [Positive Electrode for Lithium Ion Secondary Battery]

The positive electrode for a lithium ion secondary battery according to the present exemplary embodiment includes a positive electrode active material including a compound represented by the following formula (1):

Liₓ(Ni_{y}Co_{z}Al_{w})O₂ (1)

wherein, in formula (1), 0.95≤x≤1.05, 0.70≤y≤0.85, 0.05≤z≤0.20, 0.00≤w≤0.10, and y+z+w=1, and a compound represented by the following formula (2):

Li₁₊ᵤMn_{2-u/3}O₄ (2)

wherein, in formula (2), 0≤u≤0.05,
wherein the content of an alkali metal hydroxide in the positive electrode active material is 0.15% by mass or less.

In the positive electrode for a lithium ion secondary battery according to the present exemplary embodiment, a mixture composed of the compound represented by formula (1) and the compound represented by formula (2) is used as a positive electrode active material, and the content of an alkali metal hydroxide in the positive electrode active material is set to be 0.15% by mass or less.

When the expansion-contraction of the positive electrode active material is promoted by the charge-discharge cycle of the lithium ion secondary battery, the alkali metal hydroxide such as lithium hydroxide contained as an impurity in the positive electrode active material is eluted, and accumulated on the surface of the positive electrode and the surface of the negative electrode. The accumulated alkali metal hydroxide is an insulator, and disturbs the contact between each of the active materials and the electrolyte solution, and thus, the resistances of the electrodes are increased. Accordingly, the parts of the active materials whose whole surface is covered with an alkali metal hydroxide do not contribute to the battery reaction. On the other hand, only the parts of the active materials whose whole surface is not covered with an alkali metal hydroxide contribute to the charge-discharge, and the performance degradation of the active material is promoted. Consequently, at certain number of cycles, a rapid performance degradation is caused.

The present inventors have found the above-mentioned phenomenon, and in particular, have found that the above-mentioned phenomenon remarkably occurs when the mixture composed of the compound represented by formula (1) and the compound represented by formula (2) is used as the positive electrode active material. The compound represented by formula (1) and the compound represented by formula (2) are different from each other in operating voltage, and in the lower voltage side, only the charge-discharge of the compound represented by formula (1) contributes. In this case, when the secondary battery applies a voltage at the same operating voltage as that of the high voltage side, the apparent charge-discharge rate of the compound represented by formula (1) is high, and the battery is considered to tend to be affected by the resistance increase due to the alkali metal hydroxide.

The present inventors have discovered that even when the mixture is used as the positive electrode active material, by setting the content of the alkali metal hydroxide in the positive electrode active material to be 0.15% by mass or less, the increase of the resistance due to the alkali metal hydroxide can be drastically reduced, and even when the charge-discharge cycle is repeated, a lithium ion secondary battery exhibiting a high capacity retention rate is obtained. Hereinafter, the details of the present exemplary embodiment are described, but the present exemplary embodiment is not limited to these details.

The positive electrode active material according to the present exemplary embodiment includes the compound represented by formula (1) and the compound represented by formula (2).

In formula (1), from the viewpoint of the balance between the initial charge-discharge capacity of the positive electrode active material and the capacity retention rate after charge-discharge of the positive electrode active material, x satisfies the relation 0.95≤x≤1.05, preferably the relation 0.97≤x≤1.04 and more preferably the relation 0.98≤x≤1.03. From the viewpoint of the balance among the initial charge-discharge capacity of the positive electrode active material, the safety of the secondary battery and the capacity retention rate after charge-discharge of the secondary battery, y satisfies the relation 0.70≤y≤0.85, preferably the relation 0.77≤y≤0.83 and more preferably the relation 0.79≤y≤0.81. From the viewpoint of the balance between the initial charge-discharge capacity of the positive electrode active material and the capacity retention rate after charge-discharge of the positive electrode active material, z satisfies the relation 0.05≤z≤0.20, preferably the relation 0.10≤z≤0.20, more preferably the relation 0.13≤z≤0.17 and furthermore preferably the relation 0.14≤z≤0.16. From the viewpoint of the capacity retention rate after charge-discharge, w satisfies the relation 0.00≤w≤0.10, preferably the relation 0.02≤w≤0.07 and more preferably the relation 0.04≤w≤0.06.

In formula (2), from the viewpoint of the balance between the initial charge-discharge capacity of the positive electrode active material and the capacity retention rate after charge-discharge of the positive electrode active material, u satisfies the relation 0≤u≤0.05, preferably the relation 0<u≤0.05, more preferably the relation 0.02≤u≤0.04 and furthermore preferably the relation 0.03≤u≤0.04. Regarding the composition proportions of the individual elements in formula (1) and formula (2), the composition proportion of Mn in formula (2) is a value measured by an oxidation-reduction titration method, and the composition proportions of the other elements are the values measured by an induction-coupled plasma emission analysis method.

The mass of the compound represented by formula (1) included in the positive electrode active material is preferably 5% by mass or more and 50% by mass or less, in relation to the total mass of the compound represented by formula (1) and the compound represented by formula (2) included in the positive electrode active material, from the viewpoint of more obtaining the advantageous effects of the present exemplary embodiment. This proportion is more preferably 10% by mass or more and 45% by mass or less, furthermore preferably 15% by mass or more and 40% by mass or less and particularly preferably 20% by mass or more and 35% by mass or less. The proportion can be set to be 30% by mass or more and 50% by mass or less.

The positive electrode active material according to the present exemplary embodiment may include a compound other than the compound represented by formula (1) and the compound represented by formula (2). However, the proportion of the compound represented by formula (1) and the compound represented by formula (2) included in the positive electrode active material is preferably 80% by mass or more, more preferably 90% by mass or more and particularly preferably 100% by mass; in other words, the positive electrode active material is particularly preferably composed of the compound represented by formula (1) and the compound represented by formula (2).

In the present exemplary embodiment, the content of the alkali metal hydroxide in the positive electrode active material is 0.15% by mass or less. From the viewpoint of more improving the capacity retention rate in the charge-discharge cycles, the above-mentioned content is preferably 0.13% by mass or less, more preferably less than 0.10% by mass, furthermore preferably 0.09% by mass or less and particularly preferably 0.07% by mass or less. The above-mentioned content may be 0% by mass, but is preferably 0.01% by mass or more from the viewpoint of securing the capacity retention rate in the case where the battery is stored in a state of charge. The content of the alkali metal hydroxide in the positive electrode active material is a value measured by an acid-base titration method.

The content of the alkali metal hydroxide contained as an impurity in the compound represented by formula (1) is preferably 0.45% by mass or less. The compound represented by formula (1) contains as an impurity in the production process thereof the alkali metal hydroxide, in particular lithium hydroxide. The alkali metal hydroxide is present between the primary particles of the compound represented by formula (1) and binds the primary particles to each other. When the compound represented by formula (1) and the compound represented by formula (2) are mixed with each other, and when a slurry including the positive electrode active material is applied to a positive electrode current collector, if large particles are mixed, the so-called lumps are generated, to cause clogging of a filter or occurrence of smears or streaks on the positive electrode after application. Accordingly, it is necessary to subject the compound represented by formula (1) to a pulverization treatment. However, when the alkali metal hydroxide is contained in a large content in the compound represented by formula (1), the alkali metal hydroxide, in particular lithium hydroxide has deliquescence and accordingly has strong binding strength, and hence the pulverization treatment requires a large external force. In the case where the external force is applied to the compound represented by formula (1) but not to the alkali metal hydroxide, the secondary particles of the compound represented by formula (1) are cracked to generate newly-generated cross sections. Because the larger is the area of the interface of the positive electrode active material exposed to the electrolyte solution, the more rapidly the positive electrode active material is degraded, the compound represented by formula (1), whose secondary particles are cracked, is degraded in the capacity retention rate in the charge-discharge cycles. In the present exemplary embodiment, the content of 0.45% by mass or less of the alkali metal hydroxide contained as an impurity in the compound represented by formula (1) can weaken the mutual binding strength of the primary particles and can prevent the cracking of the secondary particles in the pulverization treatment, and hence the capacity retention rate is improved. The content of the alkali metal hydroxide contained as an impurity in the compound represented by formula (1) is more preferably 0.40% by mass or less, furthermore preferably 0.35% by mass or less and particularly preferably 0.30% by mass or less. The content of the alkali metal hydroxide contained as an impurity in the compound represented by formula (1) is a value measured by an acid-base titration method.

Examples of the alkali metal hydroxide include lithium hydroxide, sodium hydroxide, potassium hydroxide, rubidium hydroxide and cesium hydroxide. These may be contained each alone, or two or more thereof may also be contained. As described above, the alkali metal hydroxide is often contained as an impurity in the compound represented by formula (1) in the production process thereof, and accordingly lithium hydroxide is preferable as the alkali metal hydroxide. The alkali metal hydroxide may be contained in at least one of the compound represented by formula (1) and the compound represented by formula (2), or may be contained in these compounds by separately adding the alkali metal hydroxide to these compounds.

The pH of the aqueous dispersion containing 2% by mass of the compound represented by formula (1) is preferably 11.0 or more and 11.5 or less. In the case where LiPF₆ is contained as an electrolyte in the electrolyte solution, part of LiPF₆ is decomposed in charge-discharge, and the resulting decomposition product reacts with water to generate an acid. The resulting acid attacks the Mn skeleton of the compound represented by formula (2), a Lewis base, and thus Mn is eluted. The eluted Mn is deposited as an insulator on the negative electrode side, and thus the resistance of the secondary battery is increased. In the present exemplary embodiment, the pH of 11.0 or more of the aqueous dispersion containing 2% by mass of the compound represented by formula (1) results in the neutralization of the generated acid, thus the elution of Mn is reduced, and accordingly the increase of the resistance of the secondary battery can be prevented. In the case where the electrolyte solution contains the below-described compound capable of forming a coating film having a Lewis acid on the negative electrode by charge-discharge, when the pH is high, the hydroxide ion undergoes an acid-base reaction with the coating film having a Lewis acid such as a sulfonic acid group, covering the negative electrode, thus the coating film effect of the negative electrode is lost, and the capacity retention rate is degraded. In the present exemplary embodiment, the pH of 11.5 or less of the aqueous dispersion containing 2% by mass of the compound represented by formula (1) allows the acid-base reaction to be reduced, and accordingly the coating film effect of the negative electrode can be sufficiently obtained. Moreover, in the case where polyvinylidene fluoride (PVDF) is used as a binder as described below, PVDF reacts with the hydroxide ion to be gelled, and accordingly the pH of 11.5 or less of the aqueous dispersion containing 2% by mass of the compound represented by formula (1) allows the gelation to be reduced. The pH of the aqueous dispersion containing 2% by mass of the compound represented by formula (1) is more preferably 11.0 or more and 11.4 or less, furthermore preferably 11.0 or more and 11.2 or less and particularly preferably exceeds 11.0 and is 11.2 or less. The pH of the aqueous dispersion containing 2% by mass of the compound represented by formula (1) is the pH value, measured with a pH meter, of an aqueous dispersion prepared by dispersing 2% by mass of the compound represented by formula (1) in water.

The starting materials of the compound represented by formula (1) and the compound represented by formula (2) are not particularly limited. As the starting materials of Li, for example, Li₂CO₃, LiOH, Li₂O and Li₂SO₄ can be used. As the starting materials of Ni, for example, NiO, Ni(OH), NiSO₄ and Ni(NO₃)₂ can be used. As the starting materials of Co, for example, CoO, Co(OH)₂ and CoCO₃ can be used. As the starting materials of Al, for example, Al₂O₃ and Al(OH)₃ can be used. As the starting materials of Mn, for example, various Mn oxides such as electrolytic manganese dioxide (EMD), Mn₂O₃, Mn₃O₄ and CMD (chemical manganese dioxide), and MnCO₃ and MnSO₄ can be used. These may be used each alone, or in combinations of two or more thereof.

The methods for producing the compound represented by formula (1) and the compound represented by formula (2) are not particularly limited. For example, the starting materials are weighed so as to give the intended metal composition proportions and then mixed with each other. The mixing can be performed by pulverizing and mixing with, for example, a ball mill or a jet mill. The compounds are obtained by firing the obtained mixed powders, for example, at a temperature of 400°C to 1200°C, in the air or in oxygen.

The positive electrode for a lithium ion secondary battery according to the present exemplary embodiment includes the positive electrode active material. The positive electrode for a lithium ion secondary battery can be prepared by providing a positive electrode current collector with the positive electrode active material. Specifically, the above-mentioned positive electrode can be prepared by preparing a slurry by dispersing the positive electrode active material, a binder and a conductive aid in a solvent, and applying the slurry to the positive electrode current collector, and drying the applied slurry. As the binder, for example, polyvinylidene fluoride (PVDF), an acrylic resin and polytetrafluoroethylene can be used. Among these, from the viewpoint of more obtaining the advantageous effects of the present exemplary embodiment, PVDF is preferable as the binder. As the conductive aid, for example, a carbon material, a metallic substance such as aluminum, and a powder of a conductive oxide can be used. As the positive electrode current collector, for example, a metal thin film mainly containing aluminum can be used. As the solvent, for example, N-methyl-2-pyrrolidone (NMP) can be used.

The additive amount of the binder can be set to be 1 to 10% by mass. The additive amount set to be 1% by mass or more allows the exfoliation of the positive electrode to be prevented. The additive amount set to be 10% by mass or less allows the proportion of the mass of the positive electrode active material to be large, and accordingly allows the capacity per mass to be made large. The additive amount of the conductive aid can be set to be 1 to 10% by mass. The additive amount set to be 1% by mass or more allows a sufficient conductivity to be maintained. The additive amount set to be 10% by mass or less allows the proportion of the mass of the positive electrode active material to be made large, and accordingly allows the capacity per mass to be made large.

### [Lithium Ion Secondary Battery]

The lithium ion secondary battery according to the present exemplary embodiment includes the positive electrode for a lithium ion secondary battery according to the present exemplary embodiment and a negative electrode. For example, the lithium ion secondary battery according to the present exemplary embodiment includes the positive electrode for a lithium ion secondary battery according to the present exemplary embodiment and a negative electrode including a negative electrode active material capable of occluding and releasing lithium. A separator is interposed between the positive electrode and the negative electrode so as for the positive electrode and the negative electrode not to be electrically connected to each other, the positive electrode and the negative electrode are in a state of being immersed in a lithium ion conductive electrolyte solution, and these are sealed in an outer package.

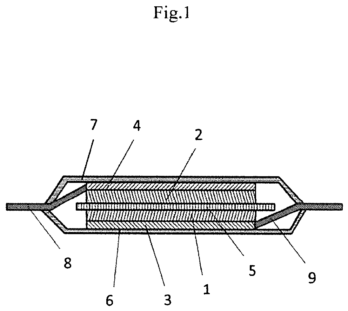

An example of the configuration of the lithium ion secondary battery according to the present exemplary embodiment is shown in Figure 1. A positive electrode active material layer 1 including the positive electrode active material is formed on the positive electrode current collector 3, to constitute the positive electrode for the lithium ion secondary battery according to the present exemplary embodiment. A negative electrode active material layer 2 including a negative electrode active material is formed on the negative electrode current collector 4, to constitute the negative electrode. These positive electrode and negative electrode are disposed in a state of being immersed in the electrolyte solution so as to face each other through the intermediary of a separator 5. These are housed in the outer packages 6 and 7. The positive electrode is connected to one end of a positive electrode tab 9 and the negative electrode is connected to one end of a negative electrode tab 8, and the other ends of the positive electrode tab 9 and negative electrode tab 8 are disposed in the outside of the secondary battery.

By applying a voltage across the positive electrode and the negative electrode, lithium ion is desorbed from the positive electrode active material, and lithium ion is absorbed in the negative electrode active material, to produce a state of charge. By electrically contacting the positive electrode and the negative electrode with each other outside the secondary battery, lithium ion is desorbed from the negative electrode active material and lithium ion is absorbed in the positive electrode active material, in a manner contrary to the case of charging, and consequently discharge occurs.

As the negative electrode active material, it is possible to use a material capable of absorbing/desorbing lithium. As the negative electrode active material, for example, it is possible to use: carbon materials such as graphite, hard carbon, soft carbon and amorphous carbon; lithium metal; Si; Sn: Al; oxides of Si such as SiO; oxides of Sn, Li₄Ti₅O₁₂; oxides of Ti such as TiO₂; V-containing oxides; Sb-containing oxides, Fe-containing oxides and Co-containing oxides. These negative electrode active materials may be used each alone or in combinations of two or more thereof. As the negative electrode active material, graphite is preferable from the viewpoint of the capacity retention rate and safety.

In particular, as the negative electrode active material, preferable is a graphite having no coating film provided on the surface thereof, or a graphite having a coating film provided on the surface thereof with the amount of the coating film less than 10% by mass in relation to the graphite. When the graphite having an amount of the coating film less than 10% by mass in relation to the graphite is used, the coating film does not sufficiently cover the graphite, and when the electrolyte solution contains the below-described additive, the coating film having a Lewis acid covers the negative electrode. When the coating film having a Lewis acid is eluted by the reaction with the alkali metal hydroxide, the intercalation reaction of Li proceeds to a large extent, Li remains as captured in the negative electrode, and consequently the capacity retention rate is sometimes degraded in the charge-discharge cycles. Accordingly, when the graphite having an amount of the coating film less than 10% by mass in relation to the graphite is used, the advantageous effects of the present exemplary embodiment are more largely obtained. In addition, when the graphite having an amount of the coating film less than 10% by mass in relation to the graphite is used, the initial capacity becomes large, and consequently the voltage applied to the positive electrode tends to be increased from the beginning of the charge-discharge cycle. In such a state, the elution of the alkali metal hydroxide with the progress of the charge-discharge cycles increases the time required for the charge-discharge on the lower voltage side to which the compound represented by formula (1) contributes, and consequently the effect of the resistance increase due to the alkali metal hydroxide grows. Accordingly, when the graphite having an amount of the coating film less than 10% by mass in relation to the graphite is used, the advantageous effects due to the present exemplary embodiment are more largely obtained. As the negative electrode active material, a graphite having an amount of the coating film of 8% by mass or less in relation to the graphite is preferable, a graphite having an amount of the coating film of 6% by mass or less in relation to the graphite is more preferable, and a graphite having an amount of the coating film of 4% by mass or less in relation to the graphite is furthermore preferable.

Examples of the coating film provided on the surface of a graphite include a coating film formed of pitch. These may be used each alone or in combinations of two or more thereof. It is to be noted that the coating film as referred to herein is different from a SEI film described below, and is a coating film preliminarily present on the surface of a graphite.

The negative electrode can be prepared by providing the negative electrode current collector with the negative electrode active material. Specifically, the above-mentioned negative electrode can be prepared by preparing a slurry by dispersing the negative electrode active material, a binder and a conductive aid in a solvent, and applying the slurry to the negative electrode current collector, and drying the applied slurry. As the binder, for example, PVDF, an acrylic resin, a styrene-butadiene rubber, an imide resin, an imidamide resin and polytetrafluoroethylene can be used. As the conductive aid, for example, a carbon material, a metallic substance such as aluminum, and a powder of a conductive oxide can be used. As the negative electrode current collector, for example, a metal thin film mainly containing aluminum or copper can be used. As the solvent, for example, NMP can be used.

The additive amount of the binder can be set to be 1 to 10% by mass. The additive amount set to be 1% by mass or more allows the exfoliation of the negative electrode to be prevented. The additive amount set to be 10% by mass or less allows the proportion of the mass of the negative electrode active material to be large, and accordingly allows the capacity per mass to be made large. The additive amount of the conductive aid can be set to be 1 to 10% by mass. The additive amount set to be 1% by mass or more allows a sufficient conductivity to be maintained. The additive amount set to be 10% by mass or less allows the proportion of the mass of the negative electrode active material to be made large, and accordingly allows the capacity per mass to be made large.

As the electrolyte solution, it is possible to use a solution prepared by dissolving a lithium salt as a supporting electrolyte salt in a solvent. Examples of the solvent include: cyclic carbonates such as ethylene carbonate (EC), propylene carbonate (PC), butylene carbonate (BC) and vinylene carbonate (VC); linear carbonates such as dimethyl carbonate (DMC), ethyl methyl carbonate (EMC), diethyl carbonate (DEC) and dipropyl carbonate (DPC); aliphatic carboxylic acid esters such as methyl formate, methyl acetate and ethyl propionate; γ-lactones such as γ-butyrolactone; linear ethers such as 1,2-diethoxyethane (DEE) and ethoxymethoxyethane (EME); cyclic ethers such as tetrahydrofuran and 2-methyltetrahydrofuran; and aprotic organic solvents such as dimethyl sulfoxide, 1,3-dioxolane, formamide, acetamide, dimethylformamide, dioxolane, acetonitrile, propyl nitrile, nitromethane, ethyl monoglyme, phosphoric acid triester, trimethoxymethane, dioxolane derivatives, sulfolane, methyl sulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, N-methylpyrrolidone and fluorinated carboxylic acid esters. These may be used each alone or in combinations of two or more thereof. Among these, from the viewpoint of the stability at high voltage or the viscosity of the solvent, a mixed solution composed of a cyclic carbonate and a linear carbonate is preferable as the solvent.

Examples of the lithium salt include: LiPF₆, LiAsF₆, LiAlCl₄, LiClO₄, LiBF₄, LiSbF₆, LiCF₃SO₃, LiC₄F₉SO₃, LiC(CF₃SO₂)₃, LiN(CF₃SO₂)₂, LiN(C₂F₅SO₂)₂, LiB₁₀Cl₁₀, lower aliphatic carboxylic acid lithium, chloroborane lithium, lithium tetraphenylborate, LiBr, LiI, LiSCN and LiCl. These may be used each alone or in combinations of two or more thereof. As the lithium salt, LiPF₆ is preferable from the viewpoint of more obtaining the advantageous effects of the present exemplary embodiment.

The concentration of the lithium salt as the supporting electrolyte salt is preferably 0.5 to 1.5 mol/L. The concentration of the lithium salt set to be 0.5 mol/L or more allows a sufficient electric conductivity to be obtained. The concentration of the lithium salt set to be 1.5 mol/L or less allows the increase of the density and the increase of the viscosity to be reduced.

The electrolyte solution preferably contains an additive in order to form a good-quality SEI (Solid Electrolyte Interface) film on the surface of the negative electrode by charge-discharge. The SEI film has functions to reduce the reactivity with the electrolyte solution, and to prevent the structural degradation of the negative electrode active material by smoothing the desolvation reaction associated with the intercalation/deintercalation of lithium ion. Examples of such an additive include: cyclic disulfonic acid esters such as methylene methane disulfonic acid ester (MMDS), ethylene methane disulfonic acid ester and propane methane disulfonic acid ester; cyclic sulfonic acid esters such as 1,3-propanesultone, propenesultone and butanesultone; cyclic sulfones such as sulfolane; cyclic halogenated carbonates such as fluorinated ethylene carbonate (FEC), trifluoromethyl propylene carbonate and chloroethylene carbonate; unsaturated carbonates such as vinylene carbonate (VC), vinyl ethylene carbonate, phenylene carbonate and allylmethyl carbonate (AMC); acid anhydrides such as maleic anhydride, succinic anhydride and phthalic anhydride; cyclic imides such as succinic acid imide; lithium bisoxalate borate (LiBOB) and lithium difluoro[oxolato-O,O'] borate (LiBF₂(C₂O₄)); sulfites such as ethylene sulfite (ES), vinylethylene sulfite, butylene sulfite, dimethyl sulfite and diethyl sulfite; unsaturated esters such as vinyl acetate and divinyl adipate (ADV); glycolides such as dimethyl glycolide and tetramethyl glycolide; and cyanofurans. These may be used each alone or in combinations of two or more thereof. Among these, from the viewpoint of more obtaining the advantageous effects of the present exemplary embodiment, as the additive, preferable are the compounds capable of forming a coating film having a Lewis acid such as a sulfonic acid group on the negative electrode by charge-discharge. Examples of such a compound include the cyclic disulfonic acid esters and the cyclic sulfonic acid esters. These may be used each alone or in combinations of two or more thereof.

The content of the additive contained in the electrolyte solution is preferably 0.1% by mass or more and 10% by mass or less, and more preferably 0.5% by mass or more and 3% by mass or less. The content of the additive set to be 0.1% by mass or more allows a good-quality SEI film to be formed. The content of the additive set to be 10% by mass or less allows the resistance to be low and the gas generation to be reduced.

There may also be used a polymer electrolyte obtained as an electrolyte solution solidified into a gel state by adding a polymer or the like to the solvent of the electrolyte solution.

Examples of the separator include fine porous membranes including polyethylene, polypropylene, polyimide, polyamide or the like.

Examples of the outer package include a battery can and a laminate film made of a laminate composed of a synthetic resin and a metal foil.

The lithium ion secondary battery according to the present exemplary embodiment can be produced by assembling with the positive electrode for a lithium ion secondary battery according to the present exemplary embodiment. For example, in an atmosphere of dry air or an inert gas, the positive electrode for a lithium ion secondary battery according to the present exemplary embodiment and a negative electrode are disposed so as to face each other in a state of being free from electrical contact with each other through the intermediary of a separator. An electrode element having the positive electrode and the negative electrode disposed so as to face each other with the separator interposed therebetween is shaped into a cylindrical form or a laminate shape. The shaped electrode element is housed in an outer package, and immersed in the electrolyte solution so as for both of the positive electrode active material and the negative electrode active material to be brought into contact with the electrolyte solution. The positive electrode tab and the negative electrode tab are connected to the positive electrode and the negative electrode, respectively, the outer package is sealed so as for these electrode tabs to be connected to the outside of the outer package, and thus a lithium ion secondary battery can be prepared.

The positive electrode and the negative electrode disposed so as to face each other with a separator interposed therebetween can take forms such as a wound type and a laminate type. Examples of the type of the lithium ion secondary battery include a coin type and a laminate type. Examples of the shape of the lithium ion secondary battery include a square shape and a cylindrical shape.

### Examples

Hereinafter, Examples of the present exemplary embodiment are presented, but the present exemplary embodiment is not limited to these Examples.

### [Example 1]

### (Preparation of Positive Electrode)

A positive electrode active material was prepared by mixing Li_{1.01}(Ni_{0.80}Co_{0.15}Al_{0.05})O₂ containing no alkali metal hydroxide and Li_{1.03}Mn_{1.99}O₄ in a mass ratio of 1:3. The content of the alkali metal hydroxide in the positive electrode active material was 0% by mass. The pH of an aqueous dispersion containing 2% by mass of Li_{1.01}(Ni_{0.80}C_{0.15}Al_{0.05}O₂ was 10.8.

The positive electrode active material, PVDF (trade name: #7200, manufactured by Kureha Corp.) as the binder, and acetylene black (trade name: super-C65, manufactured by Timcal Graphite & Carbon, Inc.) as the conductive aid were dispersed in a mass ratio of 93:3:4 in N-methyl-2-pyrrolidone (NMP) to prepare a slurry. The slurry was applied to both surfaces of a positive electrode current collector, an aluminum foil, and dried. Thus, a positive electrode was obtained.

### (Preparation of Negative Electrode)

Graphite as the negative electrode active material, a styrene-butadiene rubber (trade name: SBR, manufactured by Zeon Corp.) as the binder, carboxymethyl cellulose (CMC, manufactured by Nippon Paper Chemicals Co., Ltd.) as the thickener and acetylene black (trade name: super-C65, manufactured by Timcal Graphite & Carbon, Inc.) as the conductive aid were dispersed in a mass ratio of 96.5:1.5:1:1 in NMP to prepare a slurry. The slurry was applied to both surfaces of a negative electrode current collector, a copper foil, and dried. Thus, a negative electrode was obtained. It is to be noted that on the surface of the graphite, a coating film made of 4% by mass of pitch in relation to the graphite is formed.

### (Preparation of Lithium Ion Secondary Battery)

A separator made of polypropylene was disposed between the positive electrode and the negative electrode, and the unit layer composed of the negative electrode, the separator and the positive electrode was laminated a plurality of times. The obtained laminate was inserted into an outer package made of a laminate film. Moreover, an electrolyte solution, prepared by dissolving LiPF₆ as the supporting electrolyte salt in a concentration of 1 mol/L in a mixed solvent of EC:DEC=30:70 (volume %) and by further mixing MMDS as an additive in a content of 1.6% by mass in the resulting solution, was injected into the outer package. Subsequently, the interior of the outer package was brought into a vacuum state and the outer package was sealed. Thus, the lithium ion secondary battery in present Example was obtained.

### (Cycle Test)

The prepared lithium ion secondary battery was disposed in a thermostatic bath set at 45°C. Charging was performed on the basis of a CCCV method in which charging was performed up to 4.20 V with a constant current of 1 C (5.0A), and then a constant voltage charging was performed at a constant voltage of 4.20 V, and the total charging time of one charging process was set at 2.5 hours. Subsequently, discharging was performed at a constant current of 1C (5.0A) down to 3.0 V. This charge-discharge cycle was repeated a predetermined number of cycles. The ratio of the discharge capacity at the predetermined number of cycles to the first time discharge capacity was calculated as the capacity retention rate.

### [Example 2]

Li_{1.01}(Ni_{0.80}Co_{0.15}Al_{0.05})O₂ containing 0.29% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.07% by mass. The pH of an aqueous dispersion containing 2% by mass of Li_{1.01}(Ni_{0.80}Co_{0.15}Al_{0.05})O₂ was 11.2. A lithium ion secondary battery was prepared in the same manner as in Example 1 except that the positive electrode active material was used to prepare a positive electrode, and evaluated.

### [Example 3]

Li_{1.01}(Ni_{0.80}Co_{0.15}Al_{0.05})O₂ containing 0.36% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.09% by mass. The pH of an aqueous dispersion containing 2% by mass of Li_{1.01}(Ni_{0.80}Co_{0.15}Al_{0.05})O₂ was 11.4. A lithium ion secondary battery was prepared in the same manner as in Example 1 except that the positive electrode active material was used to prepare a positive electrode, and evaluated.

### [Example 4]

Li_{1.01}(Ni_{0.80}Co_{0.15}Al_{0.05})O₂ containing 0.43% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.11% by mass. The pH of an aqueous dispersion containing 2% by mass of Li_{1.01}(Ni_{0.80}Co_{0.15}Al_{0.05})O₂ was 11.5. A lithium ion secondary battery was prepared in the same manner as in Example 1 except that the positive electrode active material was used to prepare a positive electrode, and evaluated.

### [Example 5]

Li_{0.98}(Ni_{0.80}Co_{0.15}Al_{0.05})O₂ containing 0.43% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.11% by mass. The pH of an aqueous dispersion containing 2% by mass of Li_{0.98}(Ni_{0.80}Co_{0.15}Al_{0.05})O₂ was 11.4. A lithium ion secondary battery was prepared in the same manner as in Example 1 except that the positive electrode active material was used to prepare a positive electrode, and evaluated.

### [Example 6]

Li_{1.03}(Ni_{0.80}Co_{0.15}Al_{0.05})O₂ containing 0.43% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.11 % by mass. The pH of an aqueous dispersion containing 2% by mass of Li_{1.03}(Ni_{0.50}Co_{0.15}Al_{0.05})O₂ was 11.5. A lithium ion secondary battery was prepared in the same manner as in Example 1 except that the positive electrode active material was used to prepare a positive electrode, and evaluated.

### [Comparative Example 1]

Li_{1.01}(Ni_{0.80}C_{0.15}Al_{0.05})O₂ containing 0.64% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.16% by mass. The pH of an aqueous dispersion containing 2% by mass of Li_{1.01}(Ni_{0.80}Co_{0.15}Al_{0.05})O₂ was 11.7. A lithium ion secondary battery was prepared in the same manner as in Example 1 except that the positive electrode active material was used to prepare a positive electrode, and evaluated.

### [Comparative Example 2]

Li_{1.01}(Ni_{0.80}C_{0.15}Al_{0.05})O₂ containing 1.30% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.33% by mass. The pH of an aqueous dispersion containing 2% by mass of Li_{1.01}(Ni_{0.80}Co_{0.15}Al_{0.05})O₂ was 12.0. A lithium ion secondary battery was prepared in the same manner as in Example 1 except that the positive electrode active material was used to prepare a positive electrode, and evaluated.

### [Comparative Example 3]

Li_{1.01}(Ni_{0.80}Co_{0.15}Al_{0.05})O₂ containing 1.20% by mass of lithium hydroxide and Li_{1.03}Mn_{1.99}O₄ were mixed in a mass ratio of 1:3, and further sodium hydroxide was added to the resulting mixture so as to have a content of 0.10% by mass of the whole of the positive electrode active material, to prepare a positive electrode active material. The content of the alkali metal hydroxide in the positive electrode active material was 1.30% by mass. The content of the lithium hydroxide in the positive electrode active material was 0.30% by mass. The pH of an aqueous dispersion containing 2% by mass of Li_{1.01}(Ni_{0.80}Co_{0.15}Al_{0.05})O₂ was 12.0. A lithium ion secondary battery was prepared in the same manner as in Example 1 except that the positive electrode active material was used to prepare a positive electrode, and evaluated.

### [Comparative Example 4]

Li_{0.98}(Ni_{0.80}Co_{0.15}Al_{0.05})O₂ containing 0.64% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.16% by mass. The pH of an aqueous dispersion containing 2% by mass of Li_{0.98}(Ni_{0.80}Co_{0.15}Al_{0.05})O₂ was 11.6. A lithium ion secondary battery was prepared in the same manner as in Example 1 except that the positive electrode active material was used to prepare a positive electrode, and evaluated.

### [Comparative Example 5]

Li_{1.03}(Ni_{0.80}Co_{0.15}Al_{0.05})O₂ containing 0.64% by mass of lithium hydroxide and Li_{1.03}Mn_{1.99}O₄ were mixed in a mass ratio of 1:3 to prepare a positive electrode active material. The content of the alkali metal hydroxide in the positive electrode active material was 0.16% by mass. The pH of an aqueous dispersion containing 2% by mass of Li_{1.03}(Ni_{0.80}Co_{0.15}Al_{0.05})O₂ was 11.8. A lithium ion secondary battery was prepared in the same manner as in Example 1 except that the positive electrode active material was used to prepare a positive electrode, and evaluated.

### [Comparative Example 6]

Li_{1.01}(Ni_{0.80}Co_{0.15}Al_{0.05})O₂ containing 0.80% by mass of lithium hydroxide and Li_{1.03}Mn_{1.99}O₄ were mixed in a mass ratio of 1:4 to prepare a positive electrode active material. The content of the alkali metal hydroxide in the positive electrode active material was 0.16% by mass. The pH of an aqueous dispersion containing 2% by mass of Li_{1.01}(Ni_{0.80}Co_{0.15}Al_{0.05})O₂ was 11.7. A lithium ion secondary battery was prepared in the same manner as in Example 1 except that the positive electrode active material was used to prepare a positive electrode, and evaluated.

### [Comparative Example 7]

Li_{1.01}(Ni_{0.80}Co_{0.15}Al_{0.05})O₂ containing 0.48% by mass of lithium hydroxide and Li_{1.03}Mn_{1.99}O₄ were mixed in a mass ratio of 1:2 to prepare a positive electrode active material. The content of the alkali metal hydroxide in the positive electrode active material was 0.16% by mass. The pH of an aqueous dispersion containing 2% by mass of Li_{1.01}(Ni_{0.80}Co_{0.15}Al_{0.05})O₂ was 11.6. A lithium ion secondary battery was prepared in the same manner as in Example 1 except that the positive electrode active material was used to prepare a positive electrode, and evaluated.

### [Comparative Example 8]

A lithium ion secondary battery was prepared in the same manner as in Comparative Example 1 except that vinylene carbonate (VC) was used as the additive in place of MMDS, and evaluated.

### [Comparative Example 9]

A lithium ion secondary battery was prepared in the same manner as in Comparative Example 1 except that fluorinated ethylene carbonate (FEC) was used as the additive in place of MMDS, and evaluated.

### [Comparative Example 10]

A negative electrode was prepared in the same manner as in Comparative Example 1 except that a graphite having no coating film formed on the surface thereof was used as the negative electrode active material. A lithium ion secondary battery was prepared in the same manner as in Comparative Example 1 except that the negative electrode was used, and evaluated.

### [Comparative Example 11]

A negative electrode was prepared in the same manner as in Comparative Example 1 except that a graphite having a coating film formed of pitch having a proportion of 10% by mass in relation to the graphite was used as the negative electrode active material. A lithium ion secondary battery was prepared in the same manner as in Comparative Example 1 except that the negative electrode was used, and evaluated.

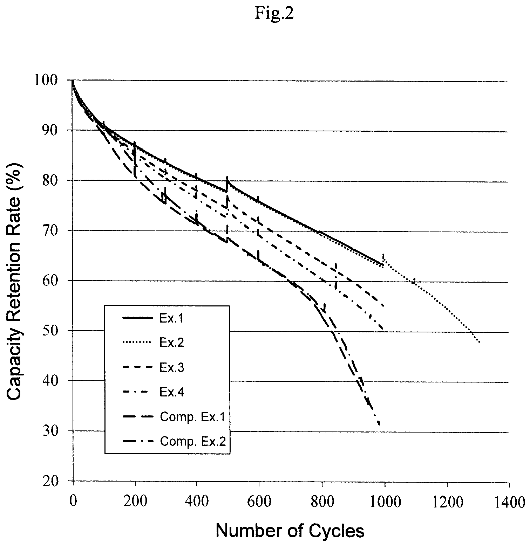

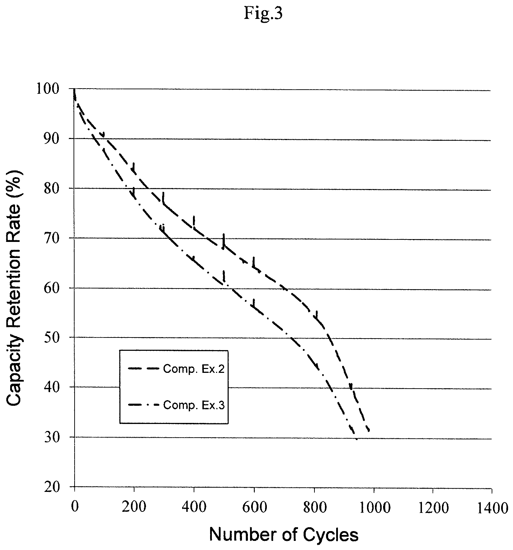

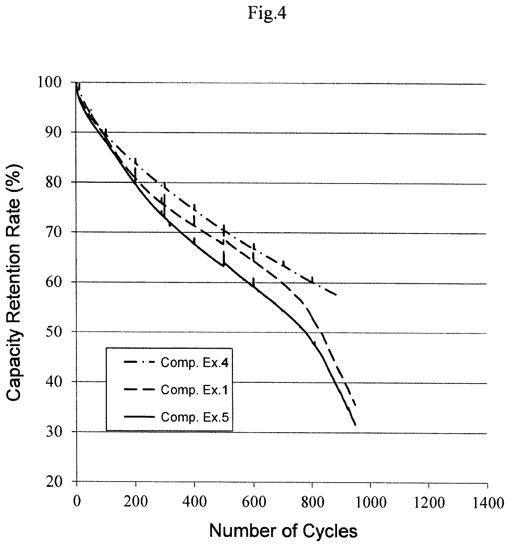

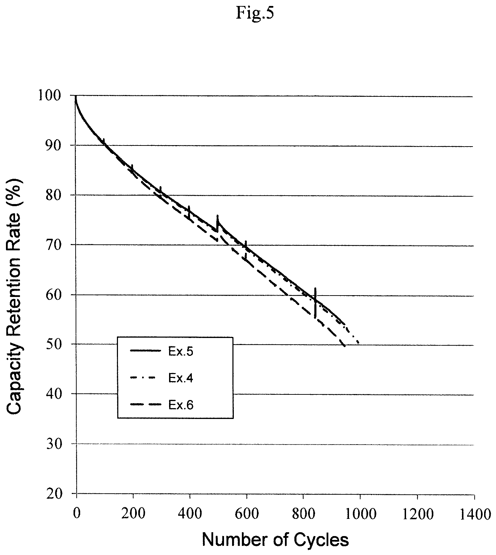

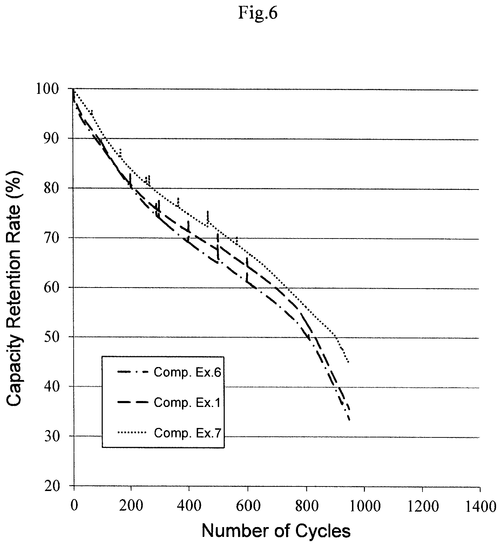

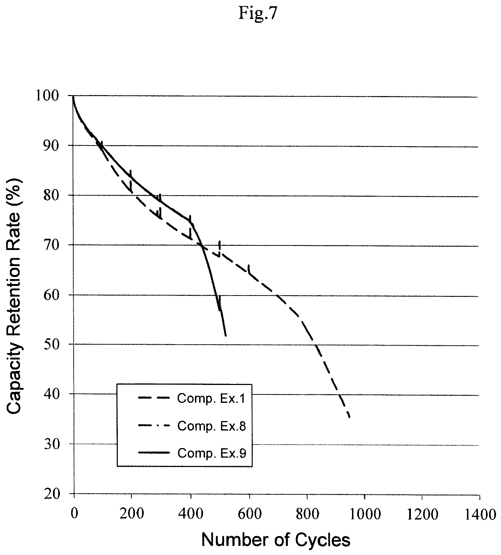

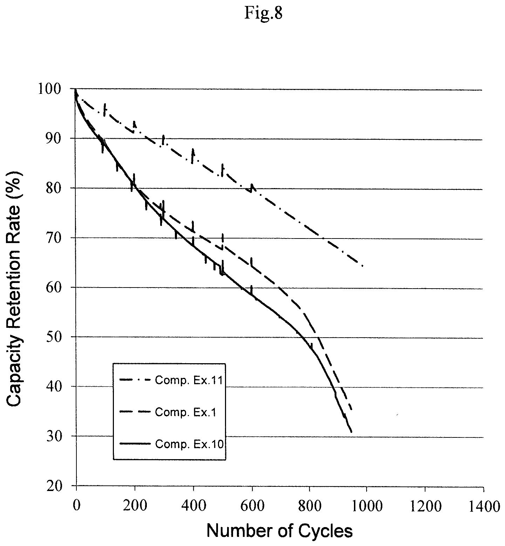

For the purpose of examining the effect of the content of the alkali metal hydroxide in the positive electrode active material, the results of the cycle test of Examples 1 to 4 and Comparative Examples 1 and 2 are shown in Figure 2. For the purpose of examining the effect of the alternative addition of the alkali metal hydroxide, the results of the cycle test of Comparative Examples 2 and 3 are shown in Figure 3. For the purpose of examining the effect of the Li composition of the compound represented by formula (1), the results of the cycle test of Comparative Examples 1, 4 and 5 are shown in Figure 4, and the results of the cycle test of Examples 4 to 6 are shown in Figure 5. For the purpose of examining the effect of the mixing proportions of the compound represented by formula (1) and the compound represented by formula (2), the results of the cycle test of Comparative Examples 1, 6 and 7 are shown in Figure 6. For the purpose of examining the effect of the type of the additive, the results of the cycle test of Comparative Examples 1, 8 and 9 are shown in Figure 7. For the purpose of examining the effect of the coating film amount on the graphite surface, the results of the cycle test of Comparative Examples 1, 10 and 11 are shown in Figure 8.

**[Table 1]**

| | Content of alkali metal hydroxide in positive electrode active material (% by mass) | Content of alkali metal hydroxide in compound of formula (1) (% by mass) | pH of 2% by mass aqueous dispersion of compound of formula (1) | Compound of formula (1)/(compound of formula (1) + compound of formula (2)) (% by mass) | Li composition of formula (1) | Additive | Coating film amount of graphite (% by mass) |
|---|---|---|---|---|---|---|---|
| Example 1 | 0 | 0 | 10.8 | 25 | 1.01 | MMDS | 4 |
| Example 2 | 0.07 | 0.29 | 11.2 | 25 | 1.01 | MMDS | 4 |
| Example 3 | 0.09 | 0.36 | 11.4 | 25 | 1.01 | MMDS | 4 |
| Example 4 | 0.11 | 0.43 | 11.5 | 25 | 1.01 | MMDS | 4 |
| Example 5 | 0.11 | 0.43 | 11.4 | 25 | 0.98 | MMDS | 4 |
| Example 6 | 0.11 | 0.43 | 11.5 | 25 | 1.03 | MMDS | 4 |
| Comparative Example 1 | 0.16 | 0.64 | 11.7 | 25 | 1.01 | MMDS | 4 |
| Comparative Example 2 | 0.33 | 1.30 | 12.0 | 25 | 1.01 | MMDS | 4 |
| Comparative Example 3 | 1.30 | 1.20 | 12.0 | 25 | 1.01 | MMDS | 4 |
| Comparative Example 4 | 0.16 | 0.64 | 11.6 | 25 | 0.98 | MMDS | 4 |
| Comparative Example 5 | 0.16 | 0.64 | 11.8 | 25 | 1.03 | MMDS | 4 |
| Comparative Example 6 | 0.16 | 0.80 | 11.7 | 20 | 1.01 | MMDS | 4 |
| Comparative Example 7 | 0.16 | 0.48 | 11.6 | 33 | 1.01 | MMDS | 4 |
| Comparative Example 8 | 0.16 | 0.64 | 11.7 | 25 | 1.01 | VC | 4 |
| Comparative Example 9 | 0.16 | 0.64 | 11.7 | 25 | 1.01 | FEC | 4 |
| Comparative Example 10 | 0.16 | 0.64 | 11.7 | 25 | 1.01 | MMDS | 0 |
| Comparative Example 11 | 0.16 | 0.64 | 11.7 | 25 | 1.01 | MMDS | 10 |

Hereinbefore, the present invention has been described with reference to the exemplary embodiment and Examples, but the present invention is not limited to the exemplary embodiment and these Examples. The constitution and the details of the present invention may be variously modified as can be understood by those skilled in the art within the scope of the present invention.

## Claims

1. A positive electrode for a lithium ion secondary battery, comprising a positive electrode active material comprising a compound represented by the following formula (1)
Liₓ(Ni_{y}Co_{z}Al_{w})O₂ (1)
wherein, in formula (1), 0.95≤x≤1.05, 0.70≤y≤0.85, 0.05≤z≤0.20, 0.00≤w≤0.10, and y+z+w=1, and a compound represented by the following formula (2)
Li₁₊ᵤMn_{2-u/3}O₄ (2)
wherein, in formula (2), 0≤u≤0.05,
**characterized in that** the content of an alkali metal hydroxide in the positive electrode active material is 0.15% by mass or less, and
wherein the pH of an aqueous dispersion comprising 2% by mass of the compound represented by formula (1) is more than 11.0 and 11.5 or less.

2. The positive electrode for a lithium ion secondary battery according to claim 1, wherein the content of the alkali metal hydroxide comprised as an impurity in the compound represented by formula (1) is 0.45% by mass or less, based on the total mass of the compound represented by formula (1).

3. The positive electrode for a lithium ion secondary battery according to claim 1 or 2, wherein the alkali metal hydroxide is lithium hydroxide.

4. The positive electrode for a lithium ion secondary battery according to any one of claims 1 to 3, wherein the content of the alkali metal hydroxide in the positive electrode active material is 0.01% by mass or more.

5. The positive electrode for a lithium ion secondary battery according to any one of claims 1 to 4, wherein the content of the alkali metal hydroxide in the positive electrode active material is less than 0.10% by mass.

6. The positive electrode for a lithium ion secondary battery according to any one of claims 1 to 5, wherein the mass of the compound represented by formula (1) comprised in the positive electrode active material is 5% by mass or more and 50% by mass or less in relation to the total mass of the compound represented by formula (1) and the compound represented by formula (2) comprised in the positive electrode active material.

7. The positive electrode for a lithium ion secondary battery according to any one of claims 1 to 6, wherein polyvinylidene fluoride is comprised as a binder.

8. The positive electrode for a lithium ion secondary battery according to any one of claims 1 to 7, wherein in formula (2), u satisfies the relation 0.02 ≤ u ≤ 0.05.

9. A lithium ion secondary battery comprising the positive electrode for a lithium ion secondary battery according to any one of claims 1 to 8 and a negative electrode.

10. The lithium ion secondary battery according to claim 9, wherein the negative electrode comprises a negative electrode active material comprising graphite.

11. The lithium ion secondary battery according to claim 10, wherein the graphite has no coating film provided on the surface thereof, or the graphite has a coating film provided on the surface thereof, and the amount of the coating film is less than 10% by mass in relation to the graphite.

12. The lithium ion secondary battery according to any one of claims 9 to 11, comprising an electrolyte solution comprising as an additive at least one of a cyclic disulfonic acid ester and a cyclic sulfonic acid ester.

13. The lithium ion secondary battery according to any one of claims 9 to 12 comprising an electrolyte solution comprising LiPF₆.

## Patentansprüche

1. Positive Elektrode für eine Lithium-Ionen-Sekundärbatterie mit einem aktiven Material der positiven Elektrode, das eine Zusammensetzung aufweist, die durch die folgende Formel (1) dargestellt wird
Liₓ(Ni_{y}Co_{z}Al_{w})O₂ (1)
, wobei in der Formel (1) 0,95≤x≤1,05, 0,70≤y≤0,85, 0,05≤z≤0,20, 0,00≤w≤0,10 und y+z+w=1 gilt,
und eine Zusammensetzung aufweist, die durch die folgende Formel (2) dargestellt wird
Li₁₊ᵤMn_{2-u/3}O₄ (2)
, wobei in der Formel (2) 0≤u≤0,05 gilt,
**dadurch gekennzeichnet, dass**
der Gehalt an Alkalimetallhydroxid im aktiven Material der positiven Elektrode 0,15 Masse-% oder weniger ist und
wobei der pH-Wert einer wässrigen Dispersion mit 2 Masse-% der durch die Formel (1) dargestellten Zusammensetzung mehr als 11,0 und 11,5 oder weniger ist.

2. Positive Elektrode für eine Lithium-Ionen-Sekundärbatterie nach Anspruch 1, wobei der Gehalt an Alkalimetallhydroxid, das in der durch die Formel (1) dargestellten Zusammensetzung als Verunreinigung vorhanden ist, basierend auf der Gesamtmasse der durch die Formel (1) dargestellten Zusammensetzung 0,45 Masse-% oder weniger ist.

3. Positive Elektrode für eine Lithium-Ionen-Sekundärbatterie nach Anspruch 1 oder 2, wobei das Alkalimetallhydroxid Lithiumhydroxid ist.

4. Positive Elektrode für eine Lithium-Ionen-Sekundärbatterie nach einem der Ansprüche 1 bis 3, wobei der Gehalt an Alkalimetallhydroxid in dem aktiven Material der positiven Elektrode 0,01 Masse-% oder mehr ist.

5. Positive Elektrode für eine Lithium-Ionen-Sekundärbatterie nach einem der Ansprüche 1 bis 4, wobei der Gehalt an Alkalimetallhydroxid in dem aktiven Material der positiven Elektrode weniger als 0,10 Masse-% ist.

6. Positive Elektrode für eine Lithium-Ionen-Sekundärbatterie nach einem der Ansprüche 1 bis 5, wobei die Masse der durch die Formel (1) dargestellten und im aktiven Material der positiven Elektrode enthaltenen Zusammensetzung 5 Masse-% oder mehr und 50 Masse-% oder weniger im Verhältnis zur Gesamtmasse der durch die Formel (1) dargestellten Zusammensetzung und der durch die Formel (2) dargestellten Zusammensetzung, die im aktiven Material der positiven Elektrode enthaltenen sind, ist.

7. Positive Elektrode für eine Lithium-Ionen-Sekundärbatterie nach einem der Ansprüche 1 bis 6, wobei Polyvinylidenfluorid als Bindemittel enthalten ist.

8. Positive Elektrode für eine Lithium-Ionen-Sekundärbatterie nach einem der Ansprüche 1 bis 7, wobei in der Formel (2) u die Relation 0,02≤u≤0,05 erfüllt.

9. Lithium-Ionen-Sekundärbatterie mit der positiven Elektrode für eine Lithium-Ionen-Sekundärbatterie nach einem der Ansprüche 1 bis 8 und einer negativen Elektrode.

10. Lithium-Ionen-Sekundärbatterie nach Anspruch 9, wobei die negative Elektrode ein Graphit aufweisendes aktives Material für die negative Elektrode aufweist.

11. Lithium-Ionen-Sekundärbatterie nach Anspruch 10, wobei der Graphit keine Beschichtungsschicht auf seiner Oberfläche aufweist, oder der Graphit eine Beschichtungsschicht auf seiner Oberfläche aufweist, und die Menge der Beschichtungsschicht weniger als 10 Masse-% im Verhältnis zum Graphit ist.

12. Lithium-Ionen-Sekundärbatterie nach einem der Ansprüche 9 bis 11 mit einer Elektrolytlösung, die als Zusatzstoff einen zyklischen Disulfonsäureester und/oder einen zyklischen Sulfonsäureester aufweist.

13. Lithium-Ionen-Sekundärbatterie nach einem der Ansprüche 9 bis 12 mit einer LiPF₆ enthaltenden Elektrolytlösung.

## Revendications

1. Electrode positive pour une batterie rechargeable à ion lithium, comprenant un matériau actif d'électrode positive comprenant un composé représenté par la formule (1) suivante
Liₓ(Ni_{y}Co_{z}Al_{w})O₂ (1)
dans laquelle, dans la formule (1), 0,95 ≤ x ≤ 1,05, 0,70 ≤ y≤ 0,85, 0,05 ≤ z ≤ 0,20, 0,00 ≤ w ≤ 0,10, et y + z + w = 1,
et un composé représenté par la formule (2) suivante
Li₁₊ᵤMn_{2-u/3}O₄ (2)
dans laquelle, dans la formule (2), 0 ≤ u ≤ 0,05,
**caractérisée en ce que** la teneur d'un hydroxyde de métal alcalin dans le matériau actif d'électrode positive est de 0,15 % en masse ou moins, et
dans laquelle le pH d'une dispersion aqueuse comprenant 2 % en masse du composé représenté par la formule (1) est de plus de 11,0 et de 11,5 ou moins.

2. Electrode positive pour une batterie rechargeable à ion lithium selon la revendication 1, dans laquelle la teneur de l'hydroxyde de métal alcalin incluse sous forme d'impureté dans le composé représenté par la formule (1) est de 0,45 % en masse ou moins, rapporté à la masse totale du composé représenté par la formule (1).

3. Electrode positive pour une batterie rechargeable à ion lithium selon la revendication 1 ou 2, dans laquelle l'hydroxyde de métal alcalin est de l'hydroxyde de lithium.

4. Electrode positive pour une batterie rechargeable à ion lithium selon l'une quelconque des revendications 1 à 3, dans laquelle la teneur de l'hydroxyde de métal alcalin dans le matériau actif d'électrode positive est de 0,01 % en masse ou plus.

5. Electrode positive pour une batterie rechargeable à ion lithium selon l'une quelconque des revendications 1 à 4, dans laquelle la teneur de l'hydroxyde de métal alcalin dans le matériau actif d'électrode positive est de moins de 0,10 % en masse.

6. Electrode positive pour une batterie rechargeable à ion lithium selon l'une quelconque des revendications 1 à 5, dans laquelle la masse du composé représenté par la formule (1) incluse dans le matériau actif d'électrode positive est de 5 % en masse ou plus et 50 % en masse ou moins en rapport avec la masse totale du composé représenté par la formule (1) et du composé représenté par la formule (2) inclus dans le matériau actif d'électrode positive.

7. Electrode positive pour une batterie rechargeable à ion lithium selon l'une quelconque des revendications 1 à 6, dans laquelle du polyfluorure de vinylidène est inclus en tant que liant.

8. Electrode positive pour une batterie rechargeable à ion lithium selon l'une quelconque des revendications 1 à 7, dans laquelle dans la formule (2), u satisfait la relation 0,02 ≤ u ≤ 0,05.

9. Batterie rechargeable à ion lithium comprenant l'électrode positive pour une batterie rechargeable à ion lithium selon l'une quelconque des revendications 1 à 8 et une électrode négative.

10. Batterie rechargeable à ion lithium selon la revendication 9, dans laquelle l'électrode négative comprend un matériau actif d'électrode négative comprenant du graphite.

11. Batterie rechargeable à ion lithium selon la revendication 10, dans laquelle le graphite n'a aucun film de revêtement prévu sur sa surface, ou bien le graphite a un film de revêtement prévu sur sa surface, et la quantité du film de revêtement est de moins de 10 % en masse en rapport avec le graphite.

12. Batterie rechargeable à ion lithium selon l'une quelconque des revendications 9 à 11, comprenant une solution d'électrolyte comprenant comme additif au moins l'un d'un ester d'acide disulfonique cyclique et d'un ester d'acide sulfonique cyclique.

13. Batterie rechargeable à ion lithium selon l'une quelconque des revendications 9 à 12, comprenant une solution d'électrolyte comprenant du LiPF₆.
